# EUROPEAN PATENT SPECIFICATION

(11) **EP 3 037 637 B1**
(45) Date of publication and mention of the grant of the patent: **09.08.2017**
(21) Application number: 14199835.1
(22) Date of filing: 22.12.2014
(51) Int. Cl.: F01N 9/00, B01D 46/44, F01N 11/00, F01N 3/021, F01N 3/023, F01N 3/033, B01D 46/00

(54) **Method for controlling the regeneration process of a diesel particulate filter**
Verfahren zur Regelung des Regenerationsverfahrens eines Dieselpartikelfilters
Procédé pour commander le processus de régénération d'un filtre à particules diesel

(43) Date of publication of application: 29.06.2016
(73) Proprietor: Continental Automotive GmbH, 30165 Hannover (DE)
(72) Inventor: Mahaveera, Harsha, Coventry, CV3 6EP (GB); Venkobarao, Vivek, 560069 Bangalore (IN); Kuppusamy, Venkatasubramaniyan, 560076 Bangalore (IN)

(56) References cited:
- EP-A1- 1 662 101
- EP-A1- 1 873 369
- FR-A1- 2 829 526

## Description

The invention relates to a method of controlling the regeneration process of a Diesel Particulate Filter (DPF) of a diesel internal combustion engine

To avoid or at least reduce air pollution by soot particulates caused by operation of diesel combustion engines as commonly used in passenger cars and commercial road vehicles, the exhaust gas system of such a diesel combustion engine is equipped with a soot particulate filter, further on referred to as Diesel Particulate Filter or shortly DPF, which is collecting the soot particulates produced during normal operation of the diesel combustion engine. Unfortunately the DPF gets filled up and might block the exhaust gas systems. Therefore the soot has to be removed from the DPF from time to time in a regeneration process.

This is achieved by rising the exhaust gas temperature upstream the Diesel Particulate Filter and thus the temperature in the DPF during operation to a point at above 600°C during a regeneration period. At temperatures above 600°C soot begins to burn off and thus the filter is cleaned from soot. Once the DPF is cleaned the temperature is reduced again, the regeneration process stops, the engine returns to regular operation and soot is collected again by the DPF.

The problem is that the burn off of soot is an exothermic reaction itself and further increases the temperature within the Diesel Particulate Filter which can lead to uncontrolled regeneration, burn off of soot, and to excessive rise of the core temperature of the DPF above the specified limits. This may result in cracking and destruction of the internal structure of the DPF and even the DPF itself can catch fire.

To prevent such undesirable events for example US 7 621 981 B2 discloses an apparatus, system and method for dispersing heat within a particulate filter. The apparatus may include various devices for dispersing heat from a high risk portion of the particulate filter by delaying heat generation, by conducting generated heat out of the high risk portion, by absorbing the heat generated into molecular energy rather than temperature, by shifting some of the heat burden away from the particulate filter to other devices in an aftertreatment system, or out of the aftertreatment system. The delaying device may be a reduction of catalyst loading within portions of the particulate filter. The conducting device may be a plurality of thermal conduits within portions of the particulate filter. The absorption device may be a high heat capacity washcoat in portions of the particulate filter.

US 7 684 924 B2 discloses a control module comprising a thermal detection module and a protection module. The thermal detection module receives temperature data of a particulate matter filter and determines a temperature based on the temperature data. The protection module selectively reduces output of an engine when the temperature is greater than a temperature threshold. A method comprises receiving temperature data of a particulate matter filter and selectively reducing output of an engine when a temperature based on the temperature data is greater than a temperature threshold.

Another solution disclosed by US 6 574 956 B1 relates to a method for interrupting the regeneration of a particulate filter in the exhaust gas system of a diesel engine, with the mass air flow rate (MAF) and the intake manifold absolute pressure (MAP) being detected by sensors. More particularly, the invention relates to closed-loop control for interrupting the regeneration of a diesel particulate filter (DPF), when the temperature in the DPF is too high, by controlling an intake throttle valve and an exhaust gas recirculation (EGR) valve.

Within US 7 137 248 B2 a device and a method are described for controlling an internal combustion engine having an exhaust gas aftertreatment system. A parameter is determined which characterizes the intensity of a reaction in the exhaust gas aftertreatment system, starting from operating parameters which characterize the state of the internal combustion engine and/or the state of the exhaust gas aftertreatment system, wherein the parameter that characterizes the at least one of the loading state of the particulate filter, the exhaust gas temperature, the air quantity, and the burn-off speed may be specifiable starting from a variable that characterizes an oxygen content in an exhaust gas and the exhaust gas temperature. When a threshold value is exceeded by the parameter, measures are introduced for reducing the reaction speed

All of the known solutions rely on monitoring predetermined temperature threshold values and in case a threshold gets overshooted a corrective action is taken. In reality this might even be too late because of the inert behavior of the system which may cause critical hysteresis of the temperature pattern inside the Diesel Particulate Filter.

A method for controlling the regeneration process of a Diesel Particulate Filter is known from FR 2 829 526 A1. According to this method a combustion control variable of a diesel combustion engine is controlled to start and maintain a controlled burn off process of a Diesel Particulate Filter wherein the burn off process is performed as a function of a measured exit temperature of the exhaust gas in combination with an exhaust gas temperature gradient at the outlet of the Diesel Particulate Filter.

A similar method according to which a similar control is carried out is known from EP 1 662 101 A1.

It is the objective of the invention to provide a method for controlling the regeneration process of a Diesel Particulate Filter that detects and reacts to uncontrolled regeneration, in particular burn off of soot, and thus reduces or avoids excessive and destructive temperature rise within the Diesel Particulate Filter.

The objective is accomplished by the method claimed in claim 1. Claimed is a method for controlling the regeneration process of a diesel particulate filter which is disposed in an exhaust gas system of a diesel combustion engine wherein at least one of a Setpoint Temperature of the exhaust gas at the inlet of the Diesel Particulate Filter and an Oxygen Content of the exhaust gas at the inlet of the Diesel Particulate Filter and further combustion control variables of the diesel combustion engine is controlled to start and maintain a controlled burn off process and avoid or stop an uncontrolled burn off process of soot particulates collected in the Diesel Particulate Filter during operation of the diesel combustion engine, wherein the said control of the burn off process is performed as a function of a measured Exit Temperature of the exhaust gas in combination with an exhaust gas temperature gradient at the outlet of the Diesel Particulate Filter, wherein for the control of the burn off process
a regeneration start mode (RSM),
a regeneration control mode (RCM),
a regeneration reduction mode (RRM) and
a regeneration termination mode are defined and also a lower exit temperature threshold value (TH3), an intermediate exit temperature threshold value (THD4) and an upper exit temperature threshold value (THD5) for the exit temperature (T4) of the exhaust gas are determined,
and characterised in that the regeneration control mode (RCM) is started if during the execution of the regeneration start mode (RSM) the exit temperature (T4) of the exhaust gas exceeds the lower exit temperature threshold value (THD3) for a predetermined period and the temperature gradient (TG) is positive or if during the execution of the regeneration reduction mode (RRM) or the regeneration termination mode (RTM) the exit temperature (T4) of the exhaust gas goes below the upper exit temperature threshold value (THD5) and exceeds the intermediate exit temperature threshold value (THD4) but the temperature gradient (TG) is negative for a predetermined period.

The method providing the advantage of early recognition of an uncontrolled burn off process and timely applying countermeasures in order to return to a controlled burn off process and avoid overheating and destruction of the Diesel Particulate Filter.

Advantageous embodiments and enhancements which can be realized individually or in combination with each other, as far as they are not mutually exclusive, are claimed within the dependent claims and are described in more detail with reference to the drawings in the following, wherein:
- FIG. 1: is a simplified schematic drawing of a diesel combustion engine having an exhaust gas aftertreatment system as commonly known in the art;
- FIG. 2: shows a graph of the course of the Exit Temperature of the exhaust gas at the DPF outlet in relation to the Oxygen content of the exhaust gas upstream of the DPF inlet, during normal Operation of the diesel combustion engine;
- FIG. 3: shows an example of a graph of the course of the Exit Temperature of the exhaust gas at the DPF outlet in relation to the Setpoint Temperature and the Oxygen Content of the exhaust gas upstream of the DPF inlet, during the regeneration of the DPF and
- FIG.: 4 ; shows another example of a graph of the course of the Exit Temperature of the exhaust gas at the DPF outlet in relation to the Setpoint Temperature and the Oxygen Content of the exhaust gas upstream of the DPF inlet, during the regeneration of the DPF.

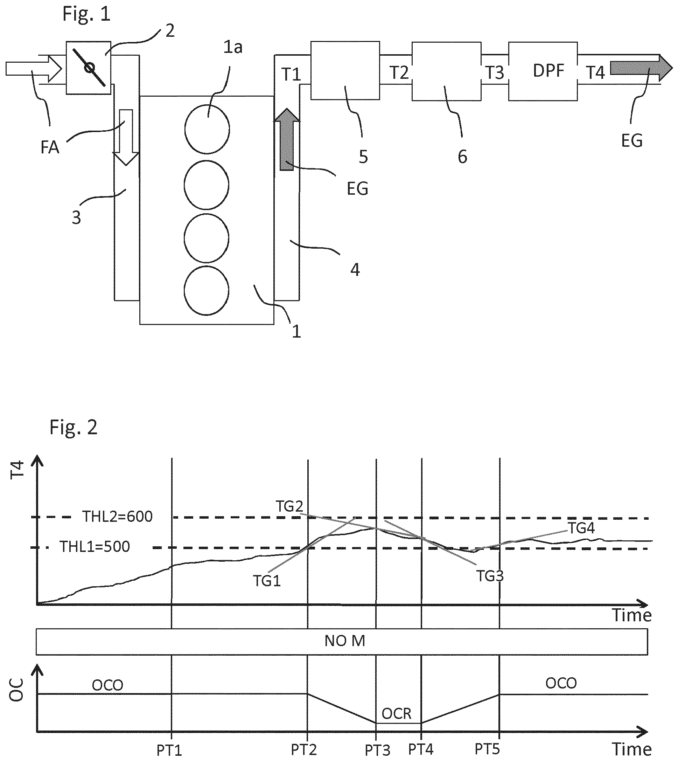

FIG. 1 shows a diesel combustion engine 1 having 4 cylinders 1a in this case. The engine takes in fresh air FA via a intake manifold 3 comprising a throttle unit 2 and discharges exhaust gas EG via the exhaust manifold 4. Connected in sequence to the exhaust manifold 3 there is a turbine 5, for example of an exhaust gas turbo charger, an exhaust gas catalyst 6 and a diesel particulate filter DPF. In addition T1 characterizes the exhaust gas temperature at the turbine inlet, T2 characterizes the exhaust gas temperature at the catalyst inlet, T3 characterizes the setpoint temperature of the exhaust gas EG at the DPF inlet and finally T4 characterizes the exit temperature of the exhaust gas EG at the DPF outlet.

FIG. 2 shows in the upper diagram the course of exit temperature T4 of the exhaust gas over time during normal operation mode NOM. For normal operation for example two temperature limits are set, a lower operation temperature limit THL1 which is set for example to 500°C and an upper operation temperature limit THL2 which is set for example to 600°C. The lower diagram in FIG. 2 shows the respective course of the oxygen content OC in the exhaust gas over time, which is set in reaction to the temperature value and the temperature gradient TG1 - TG3 in closed loop control in order to keep the exit temperature T4 in between the lower and the upper operation temperature limit THL1, THL2. The oxygen content of the exhaust gas can be set by throttling of the fresh air intake FA in relation to the fuel injected for combustion. The example in FIG. 2 shows from the start and beyond the first point in time PT1 a constant operation oxygen content level OCO and accordingly a rising course of the exit temperature T4. When the exit temperature T4 reaches the lower operation temperature limit at point in time PT2 and the temperature gradient TG1 is positive, the oxygen content gets reduced slowly until the temperature gradinet TG2 gets negative. Subsequently the oxygen content is kept constant on a reduction oxygen content level OCR for a predetermined period until point in time PT4. Because the temperature gradient TG3 is still negative in point in time PT4, the oxygen content slowly gets elevated again until the temperature gradient TG4 is positive again at point in time PT5 and the exit temperature T4 lies above the lower operation temperature limit THL1 again. The monitoring of the exit temperature value and the respective temperature gradient TG is carried on as well as the responsive adaptation of the oxygen content in order to keep the exit temperature T4 between the limits.

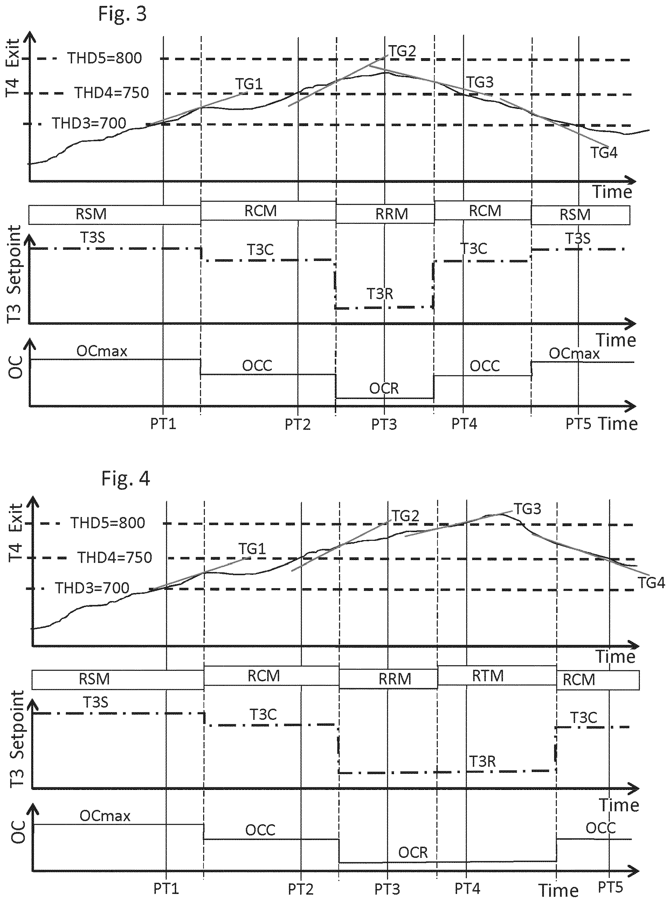

FIG. 3 shows an example of the method for controlling the regeneration process of a diesel particulate filter DPF by displaying over time the course of the monitored exit temperature of the exhaust gas EG at the DPF outlet, the course of the setpoint temperature T3 of the exhaust gas at the DPF inlet and the oxygen content OC of the exhaust Gas EG at the DPF inlet in relation to the respective operation mode. Three different operation modes are defined in the example of FIG. 3, a regeneration start mode RSM, a regeneration control mode RCM and a regeneration reduction mode RRM, but, depending from the control strategy, it could also be the case that less or more different operating modes are defined, for example according to FIG. 4 an additional regeneration termination mode is defined.

In addition three threshold temperatures are determined, a lower regeneration temperature threshold THD3, for example at 700°C, an intermediate regeneration temperature threshold THD4, for example at 750°C and a upper regeneration temperature threshold THD5, for example at 800°C.

The setpoint temperature T3 of the exhaust gas EG at the inlet of the diesel particulate filter DPF can be determined for example by setting the injection timing and the fuel mass of at least one single injection of a multiple injection event during the combustion cycle of the diesel combustion engine to respective values according to the well known state of the art.

The oxygen content OC of the exhaust gas EG at the inlet of the diesel particulate filter DPF can be determined as already described above.

The Regeneration Start Mode RSM is executed, if a particle load of the Diesel Particulate Filter DPF exceeds a specified limit or if during the execution of the Regeneration Control Mode RCM the Exit Temperature T4 of the exhaust gas goes below the intermediate Exit Temperature threshold value THD4 for a predetermined period and the Temperature Gradient TG is negative.
Starting from the left side of the diagram in FIG. 3, the regeneration start mode RSM is applied because the particle load of the DPF exceeds the specified limit.

The regeneration start mode RSM is characterized by an increase of the setpoint temperature T3 at the inlet of the DPF to a predetermined regeneration start temperature T3S and/or an increase of the Oxygen Content OC of the exhaust gas to a predetermined maximum oxygen content value OCmax. The example shows an increase of both, the setpoint temperature T3 to a regeneration start temperature T3S as well as the oxygen content OC to a maximum oxygen content OCmax which both exceed the levels of normal operation of the diesel combustion engine.
During that first period of regeneration start mode the exit temperature T4 of the exhaust gas EG at the outlet of the diesel particulate filter rises more or less constantly and reaches the lower regeneration temperature threshold at point in time PT1. For a following period the temperature gradient TG of the exit temperature T4 is monitored.

The Regeneration Control Mode RCM is started, if during the execution of the Regeneration Start Mode RSM the Exit Temperature T4 of the exhaust gas exceeds the lower Exit Temperature threshold value THD3 for a predetermined period and the Temperature Gradient TG is positive, as shown in the diagrams of FIG. 3 and 4 subsequently to point in time PT1, or if during the execution of the regeneration reduction Mode RRM or the regeneration termination Mode RTM the exit temperature T4 of the exhaust gas goes below the upper exit temperature threshold value THD5 and exceeds the intermediate exit temperature threshold value THD4 but the temperature gradient TG is negative for a predetermined period, as shown in Fig. 3 and 4 subsequently to point in time PT4.
The regeneration control mode RCM is characterized by a reduction of the setpoint temperature T3 to a predetermined regeneration control temperature T3C below a regeneration start temperature T3S (see for example regeneration start mode RSM) and/or a reduction of the oxygen content OC of the exhaust gas EG to a predetermined control oxygen content value (OCC) below a maximum oxygen content value OCmax (see for example regeneration start mode RSM).
The example of FIG. 3 shows a reduction of both, the setpoint temperature T3 to a regeneration control temperature T3C as well as the oxygen content OC to a control oxygen content OCC which both undergo the levels of the regeneration start mode RSM of the regeneration process. As also can be seen from FIG. 3 and 4 the exit temperature T4 further rises during the regeneration control mode RCM is applied and overshoots the intermediate regeneration temperature threshold THD4 at point in time PT2. Then the temperature gradient TG2 is monitored for a specified period and if the temperature gradient TG2 is still positive at the end of the period the regeneration mode is set to the regeneration reduction mode RRM.

The regeneration reduction mode RRM is applied, if during the execution of the regeneration control mode RCM the exit temperature T4 of the exhaust gas EG exceeds the intermediate exit temperature threshold value THD4 for a predetermined period and the Temperature Gradient TG is still positive, as shown in FIG. 3 and 4 subsequently to point in time PT2.

The regeneration reduction mode RRM is characterized by a further reduction of the setpoint temperature T3 to a predetermined regeneration reduction temperature T3R below a regeneration control temperature T3C (see for example regeneration control mode RCM) and/or a reduction of the oxygen content OC of the exhaust gas EG to a predetermined reduction oxygen content value OCR below a control oxygen content value OCC (see for example regeneration control mode RCM).

The example of FIG. 3 and 4 shows a further reduction of both, the setpoint temperature T3 to a regeneration reduction temperature T3R as well as the oxygen content OC to a reduction oxygen content OCR which both undergo the levels of the regeneration control mode RCM of the regeneration process. As also can be seen from the example in FIG. 3 the exit temperature T4 further rises during the regeneration reduction mode RRM is applied for a short time and then turns around and begins to drop at point in time PT3. So the regeneration reduction mode RRM shows effect. Then the temperature gradient TG2 is monitored for a specified period and if the temperature gradient TG3 is still negative at the end of the period the regeneration mode is reset to the regeneration control mode again, as already mentioned earlier.

According to the example in FIG. 3 the regeneration start mode RSM is restarted again because during the execution of the regeneration control mode RCM the exit temperature T4 of the exhaust gas goes below the intermediate exit temperature threshold value THD4 for a predetermined period and the Temperature Gradient (TG) is still negative.

FIG. 4 shows another example of the method for controlling the regeneration process of a diesel particulate filter DPF in the same manner as FIG.3. Up to point in time PT3 basically the same procedure is shown but there is no turnaround of the exit temperature T4 course and the exit temperature further rises whilst the regeneration reduction mode RRM is applied beyond the point in time PT3.

In this case the regeneration termination mode RTM is started, because during the execution of the Regeneration Reduction Mode RRM the exit temperature T4 of the exhaust gas exceeds the intermediate Exit Temperature threshold value THD4 for a predetermined period and the temperature gradient TG is still positive or if the exit temperature T4 of the exhaust gas overshoots the upper exit temperature threshold value THD5.
The regeneration termination Mode RTM is characterized by applying a regeneration reduction temperature T3R and/or a reduction oxygen content value OCR according to a Regeneration Reduction Mode RRM as described before and in addition derate the performance of the diesel combustion engine. This means that the diesel combustion engine is operated in lower setpoints of further combustion control variables of the diesel combustion engine for example for the quantity of fuel injection for previous, main and post injections of a multiple injection event and/or shifting the injection timing, in particular the start of injection and/or reducing the boost pressure setpoint of an exhaust gas turbo charger and/or further reducing the mass air flow setpoint.

The regeneration termination mode is applied as long as the exit temperature T4 of the exhaust gas has undergone the upper regeneration temperature threshold for a specified period and the temperature gradient TG4 is still negative. If this is the case the regeneration mode can be reset to the regeneration control mode again as described above.

The above described examples show that a critical course of the exit temperature T4 can be detected and countermeasures can be applied much earlier by monitoring the temperature gradient TG.

## Claims

1. Method for controlling the regeneration process of a diesel particulate filter (7) which is disposed in an exhaust gas system of a diesel combustion engine (1), wherein at least one of
a setpoint temperature (T3) of the exhaust gas at the inlet of the diesel particulate filter (DPF) and
an oxygen content (OC) of the exhaust gas at the inlet of the diesel particulate filter (DPF) and
further combustion control variables of the diesel combustion engine (1)
is controlled to start and maintain a controlled burn off process and avoid or stop an uncontrolled burn off process of soot particulates collected in the diesel particulate filter (DPF) during operation of the diesel combustion engine (1), wherein the said control of the burn off process is performed as a function of a measured exit temperature (T4) of the exhaust gas in combination with an exhaust gas temperature gradient (TG1 - TG4) at the outlet of the diesel particulate filter (DPF), wherein for the control of the burn off process a regeneration start mode (RSM),
a regeneration control mode (RCM),
a regeneration reduction mode (RRM) and
a regeneration termination mode are defined
and also
a lower exit temperature threshold value (THD3),
an intermediate exit temperature threshold value (THD4) and an upper exit temperature threshold value (THD5) for the exit temperature (T4) of the exhaust gas are determined, **characterised in that** the regeneration control mode (RCM) is started, if during the execution of the regeneration start mode (RSM) the exit temperature (T4) of the exhaust gas exceeds the lower exit temperature threshold value (THD3) for a predetermined period and the temperature gradient (TG) is positive or if during the execution of the regeneration reduction Mode (RRM) or the regeneration termination mode (RTM) the exit temperature (T4) of the exhaust gas goes below the upper exit temperature threshold value (THD5) and exceeds the intermediate exit temperature threshold value (THD4) but the temperature gradient (TG) is negative for a predetermined period.

2. The method according to claim 1, wherein the regeneration start mode (RSM) is executed,
if a particle load of the diesel particulate filter (DPF) exceeds a specified limit or
if during the execution of the regeneration control mode (RCM) the exit temperature (T4) of the exhaust gas goes below the intermediate exit temperature threshold value (THD4) for a predetermined period and the temperature gradient (TG) is negative.

3. The method according to claim 1, wherein the regeneration reduction Mode (RRM) is started,
if during the execution of the regeneration control mode (RCM) the exit temperature (T4) of the exhaust gas (EG) exceeds the intermediate exit temperature threshold value (THD4) for a predetermined period and the temperature gradient (TG) is still positive.

4. The method according to claim 1, wherein the regeneration termination mode (RTM) is started,
if during the execution of the regeneration reduction Mode (RRM) the exit temperature (T4) of the exhaust gas exceeds the intermediate exit temperature threshold value (THD4) for a predetermined period and the temperature gradient (TG) is still positive or
if the exit temperature (T4) of the exhaust gas overshoots the upper exit temperature threshold value (THD5).

5. The method according to claim 1, wherein the Regeneration Start Mode (RSM) is **characterized by** an increase of the Setpoint Temperature (T3) to a predetermined regeneration start temperature (T3S) and/or an increase of the Oxygen Content (OC) of the exhaust gas to a predetermined maximum oxygen content value (OCmax).

6. The method according to claim 1, wherein the regeneration control mode (RCM) is **characterized by** a reduction of the setpoint temperature (T3) to a predetermined regeneration control temperature (T3C) below a regeneration start temperature (T3S) and/or a reduction of the oxygen content (OC) of the exhaust gas (EG) to a predetermined control oxygen content value (OCC) below a maximum oxygen content value (OCmax).

7. The method according to claim 1, wherein the regeneration reduction mode (RRM) is **characterized by** a further reduction of the setpoint temperature (T3) to a predetermined regeneration reduction temperature (T3R) below a regeneration control temperature (T3C) and/or a reduction of the oxygen content (OC) of the exhaust gas (EG) to a predetermined reduction oxygen content value (OCR) below a control oxygen content value (OCC).

8. The method according to claim 1, wherein the regeneration termination mode (RTM) is **characterized by** applying a regeneration reduction temperature (T3R) and/or a reduction oxygen content value (OCR) according to a regeneration reduction mode (RRM) and in addition derate the performance of the diesel combustion engine.

## Patentansprüche

1. Verfahren zur Regelung des Regenerationsverfahrens eines Dieselpartikelfilters (7), der in einem Abgassystem eines Dieselverbrennungsmotors (1) angeordnet ist, wobei mindestens eine(r) von
einer Sollwerttemperatur (T3) des Abgases am Einlass des Dieselpartikelfilters (DPF) und
einem Sauerstoffgehalt (OC) des Abgases am Einlass des Dieselpartikelfilters (DPF) und
weiteren Verbrennungsregelungsvariablen des Dieselverbrennungsmotors (1)
geregelt werden, um einen geregelten Abbrennprozess zu starten und aufrechtzuerhalten und um einen ungeregelten Abbrennprozess von Rußpartikeln zu vermeiden oder zu stoppen, die sich während des Betriebs des Dieselverbrennungsmotors (1) in dem Dieselpartikelfilter (DPF) sammeln, wobei die Regelung des Abbrennprozesses als Funktion einer gemessenen Austrittstemperatur (T4) des Abgases in Kombination mit einem Abgastemperaturgradienten (TG1-TG4) am Auslass des Dieselpartikelfilters (DPF) durchgeführt wird, wobei für die Regelung des Abbrennprozesses
ein Regenerationsstartmodus (RSM),
ein Regenerationsregelungsmodus (RCM),
ein Regenerationsreduktionsmodus (RRM) und
ein Regenerationsabschlussmodus definiert werden und auch
ein unterer Austrittstemperaturschwellenwert (THD3),
ein Zwischenaustrittstemperaturschwellenwert (THD4) und ein oberer Austrittstemperaturschwellenwert (THD5) für die Austrittstemperatur (T4) des Abgases bestimmt werden, **dadurch gekennzeichnet, dass** der Regenerationsregelungsmodus (RCM) gestartet wird, wenn während der Ausführung des Regenerationsstartmodus (RSM) die Austrittstemperatur (T4) des Abgases den unteren Austrittstemperaturschwellenwert (THD3) für einen vorgewählten Zeitraum überschreitet und der Temperaturgradient (TG) positiv ist, oder wenn während der Ausführung des Regenerationsreduktionsmodus (RRM) oder des Regenerationsabschlussmodus (RTM) die Austrittstemperatur (T4) des Abgases unter den oberen Austrittstemperaturschwellenwert (THD5) geht und den Zwischenaustrittstemperaturschwellenwert (THD4) überschreitet, jedoch der Temperaturgradient (TG) für einen vorgewählten Zeitraum negativ ist.

2. Verfahren nach Anspruch 1, wobei der Regenerationsstartmodus (RSM) ausgeführt wird,
wenn eine Partikellast des Dieselpartikelfilters (DPF) einen spezifizierten Grenzwert überschreitet oder
wenn während der Ausführung des Regenerationsregelungsmodus (RCM) die Austrittstemperatur (T4) des Abgases für einen vorgewählten Zeitraum unter den Zwischenaustrittstemperaturschwellenwert (THD4) geht und der Temperaturgradient (TG) negativ ist.

3. Verfahren nach Anspruch 1, wobei der Regenerationsreduktionsmodus (RRM) gestartet wird,
wenn während der Ausführung des Regenerationsregelungsmodus (RCM) die Austrittstemperatur (T4) des Abgases (EG) für einen vorgewählten Zeitraum den Zwischenaustrittstemperaturschwellenwert (THD4) überschreitet und der Temperaturgradient (TG) noch positiv ist.

4. Verfahren nach Anspruch 1, wobei der Regenerationsabschlussmodus (RTM) gestartet wird,
wenn während der Ausführung des Regenerationsreduktionsmodus (RRM) die Austrittstemperatur (T4) des Abgases für einen vorgewählten Zeitraum den Zwischenaustrittstemperaturschwellenwert (THD4) überschreitet und der Temperaturgradient (TG) noch positiv ist, oder
wenn die Austrittstemperatur (T4) des Abgases über den oberen Austrittstemperaturschwellenwert (THD5) hinausschießt.

5. Verfahren nach Anspruch 1, wobei der Regenerationsstartmodus (RSM) durch einen Anstieg der Sollwerttemperatur (T3) auf eine vorgewählte Regenerationsstarttemperatur (T3S) und/oder einen Anstieg des Sauerstoffgehalts (OC) des Abgases auf einen vorgewählten maximalen Sauerstoffgehaltwert (OCmax) gekennzeichnet ist.

6. Verfahren nach Anspruch 1, wobei der Regenerationsregelungsmodus (RCM) durch eine Reduktion der Sollwerttemperatur (T3) auf eine vorgewählte Regenerationsregelungstemperatur (T3C) unter einer Regenerationsstarttemperatur (T3S) und/oder eine Reduktion des Sauerstoffgehalts (OC) des Abgases (EG) auf einen vorgewählten Regelungssauerstoffgehaltwert (OCC) unter einem maximalen Sauerstoffgehaltwert (OCmax) gekennzeichnet ist.

7. Verfahren nach Anspruch 1, wobei der Regenerationsreduktionsmodus (RRM) durch eine weitere Reduktion der Sollwerttemperatur (T3) auf eine vorgewählte Regenerationsreduktionstemperatur (T3R) unter einer Regenerationsregelungstemperatur (T3C) und/oder eine Reduktion des Sauerstoffgehalts (OC) des Abgases (EG) auf einen vorgewählten Reduktionssauerstoffgehaltwert (OCR) unter einem Regelungssauerstoffgehaltwert (OCC) gekennzeichnet ist.

8. Verfahren nach Anspruch 1, wobei der Regenerationsabschlussmodus (RTM) **dadurch gekennzeichnet ist, dass** eine Regenerationsreduktionstemperatur (T3R) und/oder ein Reduktionssauerstoffgehaltwert (OCR) gemäß einem Regenerationsreduktionsmodus (RRM) angewendet wird bzw. werden und zusätzlich die Leistung des Dieselverbrennungsmotors gedrosselt wird.

## Revendications

1. Procédé pour commander le processus de régénération d'un filtre à particules (7) diesel qui est disposé dans le système de gaz d'échappement d'un moteur à combustion diesel (1), dans lequel au moins une donnée parmi
la température (T3) de point de consigne du gaz d'échappement à l'entrée du filtre à particules diesel (FAP),
la teneur en oxygène (OC) du gaz d'échappement à l'entrée du filtre à particules diesel (FAP) et
d'autres variables de contrôle de combustion du moteur à combustion diesel (1)
est contrôlée pour démarrer et maintenir un processus de brûlage contrôlé et éviter ou arrêter un processus de brûlage incontrôlé des particules de suie captées dans le filtre à particules diesel (FAP) pendant le fonctionnement du moteur à combustion diesel (1),
dans lequel ladite commande du processus de brûlage s'effectue en fonction de la mesure d'une température de sortie (T4) dans le gaz d'échappement en combinaison avec un gradient de température (TG1 - TG4) de gaz d'échappement à la sortie du filtre à particules diesel (FAP),
dans lequel, pour commander le processus de brûlage, on définit
un mode de démarrage de régénération (RSM),
un mode de commande de régénération (RCM),
un mode de réduction de régénération (RRM) et
un mode d'interruption de régénération
et on détermine aussi
une valeur seuil inférieure (THD3) de température de sortie,
une valeur seuil intermédiaire (THD4) de température de sortie et
une valeur seuil supérieure (THD5) de température de sortie pour la température de sortie (T4) du gaz d'échappement, **caractérisé en ce que** le mode de commande de régénération (RCM) est lancé si, pendant l'exécution du mode de démarrage de régénération (RSM), la température de sortie (T4) du gaz d'échappement dépasse la valeur seuil inférieure (THD3) de température de sortie pendant une période prédéterminée et le gradient de température (TG) est positif ou si, pendant l'exécution du mode de réduction de régénération (RRM) ou du mode d'interruption de régénération (RTM), la température de sortie (T4) du gaz d'échappement descend sous la valeur seuil supérieure (THD5) de température de sortie et dépasse la valeur seuil intermédiaire (THD4) de température de sortie mais le gradient de température (TG) est négatif pendant une période prédéterminée.

2. Procédé selon la revendication 1, dans lequel le mode de démarrage de régénération (RSM) s'exécute
si la charge en particules du filtre à particules diesel (FAP) dépasse une limite spécifiée ou
si, pendant l'exécution du mode de commande de régénération (RCM), la température de sortie (T4) du gaz d'échappement descend sous la valeur seuil intermédiaire (THD4) de température de sortie pendant une période prédéterminée et le gradient de température (TG) est négatif.

3. Procédé selon la revendication 1, dans lequel le mode de réduction de régénération (RRM) est lancé
si, pendant l'exécution du mode de commande de régénération (RCM), la température de sortie (T4) du gaz d'échappement (EG) dépasse la valeur seuil intermédiaire (THD4) de température de sortie pendant une période prédéterminée et le gradient de température (TG) est encore positif.

4. Procédé selon la revendication 1, dans lequel le mode d'interruption de régénération (RTM) est lancé
si, pendant l'exécution du mode de réduction de régénération (RRM), la température de sortie (T4) du gaz d'échappement dépasse la valeur seuil intermédiaire (THD4) de température de sortie pendant une période prédéterminée et le gradient de température (TG) est encore positif ou
si la température de sortie (T4) du gaz d'échappement va au-delà de la valeur seuil supérieure (THD5) de température de sortie.

5. Procédé selon la revendication 1, dans lequel le mode de démarrage de régénération (RSM) se **caractérise par** une élévation de la température (T3) de point de consigne à une température de démarrage de régénération (T3S) prédéterminée et/ou une augmentation de la teneur en oxygène (OC) du gaz d'échappement jusqu'à une valeur maximale de teneur en oxygène (OCmax) prédéterminée.

6. Procédé selon la revendication 1, dans lequel le mode de commande de régénération (RCM) se **caractérise par** une réduction de la température (T3) de point de consigne jusqu'à une température de commande de régénération (T3C) inférieure à une température de démarrage de régénération (T3S) et/ou une réduction de la teneur en oxygène (OC) du gaz d'échappement (EG) jusqu'à une valeur de commande de teneur en oxygène (OCC) prédéterminée inférieure à une valeur maximale de teneur en oxygène (OCmax).

7. Procédé selon la revendication 1, dans lequel le mode de réduction de régénération (RRM) se **caractérise par** une réduction additionnelle de la température (T3) de point de consigne jusqu'à une température de réduction de régénération (T3R) inférieure à une température de commande de régénération (T3C) et/ou une réduction de la teneur en oxygène (OC) du gaz d'échappement (EG) jusqu'à une valeur de réduction de teneur en oxygène (OCR) prédéterminée inférieure à une valeur de commande de teneur en oxygène (OCC).

8. Procédé selon la revendication 1, dans lequel le mode d'interruption de régénération (RTM) se **caractérise par** l'application d'une température de réduction de régénération (T3R) et/ou d'une valeur de réduction de teneur en oxygène (OCR) selon un mode de réduction de régénération (RRM) et en plus réduit la valeur nominale des performances du moteur à combustion diesel.
